Europäisches Patentamt

European Patent Office

Office européen des brevets

(11) Veröffentlichungsnummer: **0 505 709 A2**

## EUROPÄISCHE PATENTANMELDUNG

(21) Anmeldenummer: **92102299.2**

(22) Anmeldetag: **12.02.92**

(51) Int. Cl.5: **G10L 5/06**

(30) Priorität: **28.03.91 DE 4110300**

(43) Veröffentlichungstag der Anmeldung:
**30.09.92 Patentblatt 92/40**

(84) Benannte Vertragsstaaten:
**FR GB IT NL SE**

(71) Anmelder: **TELENORMA GMBH**
**Mainzer Landstrasse 128-146**
**W-6000 Frankfurt/Main(DE)**

(72) Erfinder: **Zinke, Joachim, Dipl.-Ing.**
**Georg-Büchner-Strasse 21b**
**W-6361 Niddatal(DE)**
Erfinder: **Euler, Stephan, Dr.**
**Hauptstrasse 41**
**W-6452 Hainburg(DE)**

(54) **Verfahren zur Erweiterung des Wortschatzes für sprecherunabhängige Spracherkennung.**

(57) 2.1 Mit dem Verfahren soll erreicht werden, daß beim Hinzufügen einzelner Wörter zu einem bereits bestehenden Grundwortschatz nur eine geringe Anzahl von Sprechern erforderlich ist, um für diese neuen Wörter Wortmodelle zu bilden, mit denen eine gute Erkennungssicherheit bei sprecherunabhängiger Spracherkennung gegeben ist.

2.2 Ein von wenigen Sprechern trainiertes, neu in den Wortschatz aufzunehmendes Wort wird ebenso in Sprachblöcke eingeteilt wie die Wörter des Grundwortschatzes. Für jeden Sprachblock wird ein Merkmalsvektor berechnet. Aus den Merkmalsvektoren des neuen Wortes werden Gewichte, bezogen auf die für den Grundwortschatz bestehenden Dichtefunktionen errechnet, die den Modellzuständen des neuen Wortes zugeteilt werden.

2.3 Das Erstellen von Wortmodellen für neu aufzunehmende Wörter bei einem bereits bestehenden Grundwortschatz erfordert nur wenige Trainingssprecher.

Fig. 2a Fig. 3a

Fig. 1

Rank Xerox (UK) Business Services

Die Erfindung betrifft ein Verfahren zur Erweiterung des Wortschatzes für sprecherunabhängige Spracherkennung.

In der DE-Fachzeitschrift "Informationstechnik" 1989, Heft 6, ist ab Seite 407 ein Artikel abgedruckt mit dem Titel: "Zur Variabilität sprachlicher Äußerungen in der sprecherunabhängigen Einzelworterkennung." Dort wird insbesondere in dem auf Seite 410 beginnenden Abschnitt 3 beschrieben, auf welche Weise von jedem einzelnen Wort Wortmodelle gebildet werden, damit die Vielfalt der Äußerungen bei jedem einzelnen der zu erkennenden Wörter geeignet repräsentiert werden kann. Dabei werden in ihren Parameterwerten angepaßte Modellzustände erstellt, die aneinander gereiht den zeitlichen Verlauf einer sprachlichen Äußerung wiedergeben. Diese Modellzustände beschreiben für jeden einzelnen Zeitabschnitt mit einer z. B. in Mittelwert und Varianzen angepaßten Dichtefunktion (Bild 5) die Frequenz- und Energieverteilungen. Damit wird jede einzelne Phase eines gesprochen Wortes genau beschrieben.

Im letzten Absatz auf Seite 4 ist erwähnt, daß für die angestrebte Specherunabhängigkeit relativ große Mengen an Trainingsmustern von einer größeren Anzahl von Sprechern benötigt werden, um eine gute Erkennungssicherheit von gesprochenen Wörtern zu erreichen, die möglicherweise wichtige Steuerbefehle oder Instruktionen auslösen sollen.

Ein Artikel mit dem Titel: "Spracherkennung für den Multimedia-Dialog" ist in der Veröffentlichung: "BOSCH-Technische Berichte" von 1989, Band 8, Heft 6, ab Seite 354 abgedruckt. Hier ist die Arbeitsweise eines Spracherkenners (ab Seite 356, Punkt 3) beschrieben, wobei angegeben ist, wie ein auf die Bedienung eines Fernmelde-Endgerätes abgestimmter Grundwortschatz von einzelnen erkennbaren Wörtern erstellt wird. Diese einzelnen Wörter dienen dazu, Befehle, Steuerinformationen und Bestätigungen sprachlich abzugeben, um damit ein Endgerät bequem zu bedienen. Von jedem Wort, das zu dem besagten Grundwortschatz gehören soll, wird nur ein Wortmodell gebildet und abgespeichert, so daß es zum Vergleichen mit einem aktuell gesprochenen Wort, welches eindeutig erkannt werden soll, zur Verfügung steht.

Dabei werden sogenannte verdeckte Markov-Modelle angewendet, die den zeitlichen Verlauf und die spezifischen Eigenschaften einer sprachlichen Äußerung beschreiben. Wie auf Seite 359 in der rechten Spalte beschrieben ist, wird es für zweckmäßig gehalten, daß anstelle einer Vielzahl von Referenzen für jedes Wort nur ein Wortmodell vorhanden ist. Ein derartiges Wortmodell muß dann aber eine sehr genaue Beschreibung eines zu erkennenden Wortes beinhalten. Um dies zu erreichen, sind relativ viele Trainingssprecher erforderlich, weil ein und dasselbe Wort von verschiedenen Sprechern gesprochen unterschiedliche Charakteristika aufweist, wie dies im Bild 8 auf Seite 360 dargestellt ist. Deshalb wird auch auf Seite 362 in Abschnitt 4 ausgesagt, daß für die Erweiterung des Wortschatzes die Speicherung der Äußerungen von mindestens 50 Sprechern erforderlich ist, was einen großen Aufwand darstellt.

Diese Anzahl von Trainingssprechern muß also für das Erstellen von Wortmodellen auch dann vorhanden sein, wenn einzelne neue Wörter in den Wortschatz zusätzlich aufgenommen werden sollen, und dabei das gleiche Verfahren angewendet wird, wie beim Erstellen der Wortmodelle für den Grundwortschatz.

Aus der DE-OS 33 37 353 ist ebenfalls ein Spracherkennungssystem bekannt. Es handelt sich um einen Sprachanalysator, der auf der Grundlage eines verborgenen Markov-Modells arbeitet. Dabei wird von einer Eingangssprachäußerung, deren Bedeutung erkannt werden soll, eine Folge von akustischen Merkmalssignalen gebildet. Das daraus gewonnene Eingangsmuster wird mit bereits gespeicherten Bezugsmustern verglichen. Es heißt dazu auf Seite 7, daß bei der Spracherkennung das Eingangssprachmuster analysiert wird, um eine Folge von akustischen Merkmalen zu erzeugen. Es findet dann ein Vergleich statt mit einem Satz von vorher gespeicherten LPC-Merkmalssignalen. Zur Erzeugung von Bezugsmustermodellen werden die Sprachmuster aus den Äußerungen von vielen Sprechern abgeleitet, so daß die Spracherkennung sprecherunabhängig ist, wie dies auf Seite 10 beschrieben wird.

Genaue Angaben darüber, in welcher Weise diese Bezugsmuster entstehen und wie ein bestehender Wortschatz erweitert werden kann, sind in dieser Schrift nicht vorzufinden, weil eine ausführliche Beschreibung des Erkennungs-Algorithmus entsprechend der dort beschriebenen Erfindung den Vorrang hat. Wenn Bezugsmuster gebildet werden sollen für neue in den Wortschatz aufzunehmende Ausdrücke, so geschieht dies offenbar in der gleichen nicht näher beschriebenen Weise, wie dies beim Bilden der bereits gespeicherten Bezugsmuster geschehen ist. Es sind also auch dann viele Sprecher zur Bildung neuer Wortmodelle erforderlich, wenn bereits ein Grundwortschatz besteht.

Die Aufgabe der Erfindung besteht darin, ein Verfahren anzugeben, womit ein bereits bestehender Grundwortschatz für eine sprecherunabhängige Spracherkennung erweitert werden kann, wobei zur Bildung von Wortmodellen für zusätzliche einzelne Wörter nur eine relativ geringe Anzahl von Trainingssprechern benötigt wird. Diese Aufgabe wird mit einer Merkmalskombination gelöst, wie sie im Patentanspruch 1 angegeben ist.

Damit wird in vorteilhafter Weise erreicht, daß die für neu hinzukommende Worte erstellten Wortmodelle eine sehr hohe Qualität aufweisen, obwohl für das Training nur wenige Sprecher tätig waren.

Vorteilhafte Weiterbildungen der Erfindung sind in den Unteransprüchen angegeben.

Ein Ausführungsbeispiel der Erfindung wird nachfolgend anhand von Zeichnungen näher erläutert.

Es zeigt

Figur 1      das Zeitsignal eines neu in Wortschatz aufzunehmenden Wortes

Figur 2 a      einen Sprachblock aus dem Zeitsignal nach Figur 1;

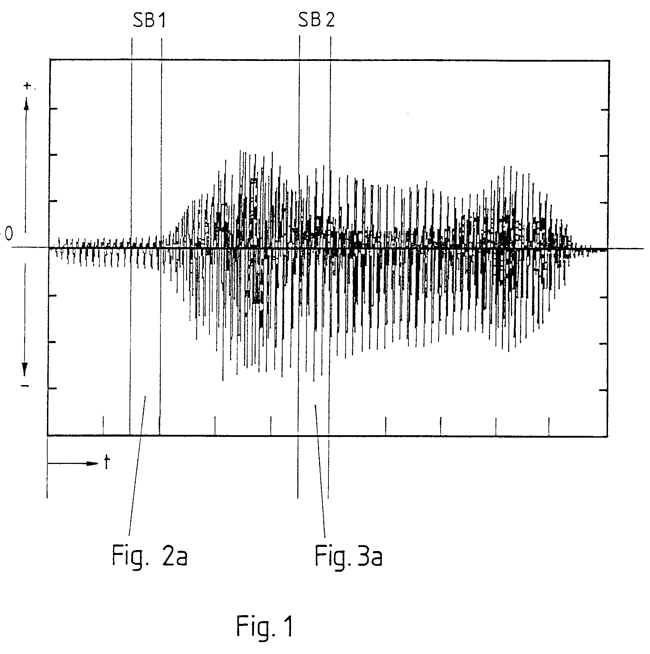

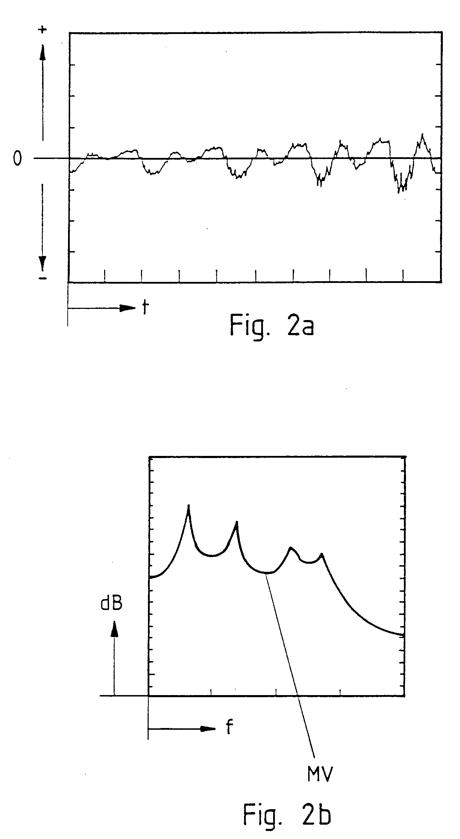

Figur 2 b      die Frequenzverteilung innerhalb des Sprachblockes nach Figuar 2 a;

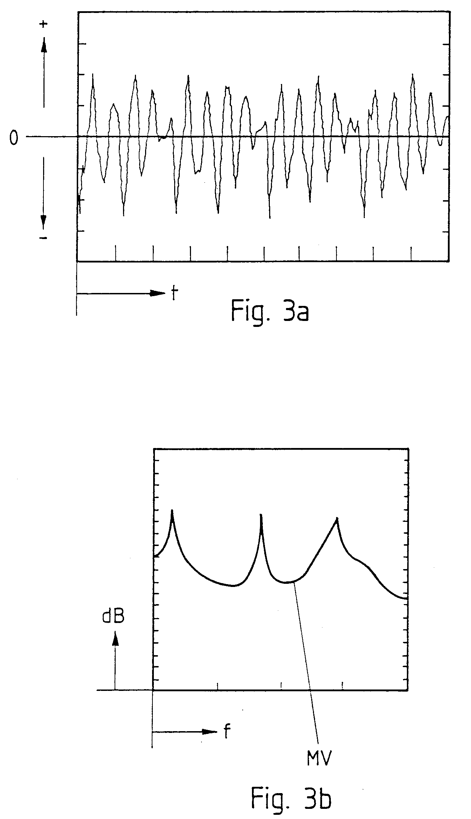

Figur 3 a      einen anderen Sprachblock aus dem Zeitsignal nach Figur 1;

Figur 3 b      die Frequenzverteilung des Sprachblockes nach Figur 2 b;

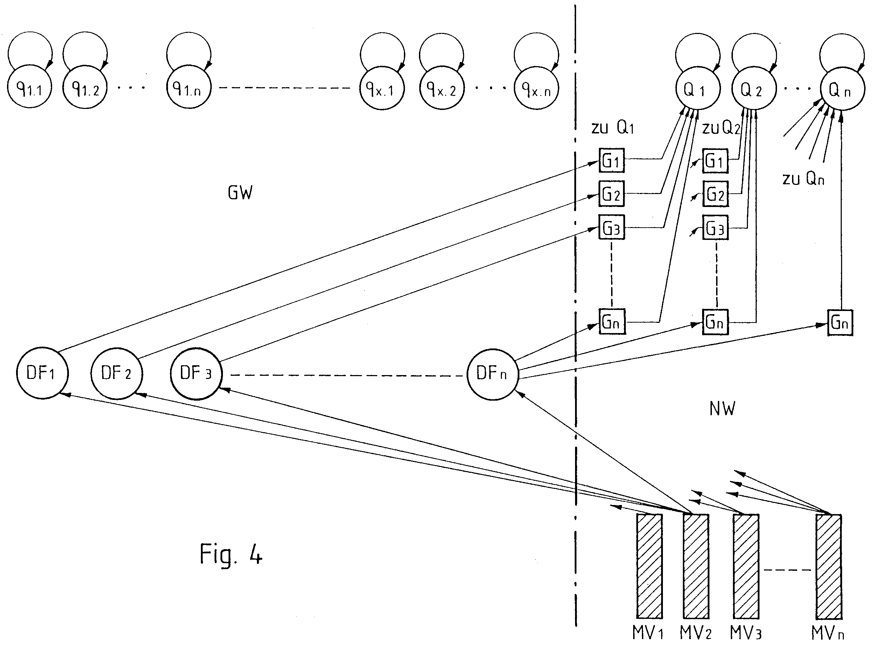

Figur 4      die Zuordnung von gewichteten Verteilungsdichten der Merkmalsvektoren zu den Modellzuständen.

Wenn ein neues Wort NW einem Grundwortschatz GW hinzugefügt werden soll, so wird dieses neue Wort von wenigen verschiedenen Sprechern gesprochen und abgespeichert. Das Verfahren kann auch mit nur einem einzigen Sprecher angewendet werden und liefert dann schon brauchbare Ergebnisse. Ein solches neues Wort NW kann entsprechend der aufeinanderfolgenden Laute einen zeitlichen Verlauf haben, wie er in der Figur 1 dargestellt ist. Nach der Aufnahme von verschiedenen Äußerungen des gleichen neuen Wortes NW werden diese jeweils separat in Sprachblöcke SB zerlegt, die jeweils eine vorbestimmte Dauer haben, welche in der Größenordnung von 15 - 40 Millisekunden liegt.

Der zeitliche Verlauf von einzelnen Sprachblöcken SB 1 und SB 2 ist in den Figuren 2 a und 3 a dargestellt, wobei es sich quasi um jeweils eine Ausschnittsvergrößerung aus der Figur 1 handelt. Dabei ist, wie auch in der Figur 1, die zu einem bestimmten Zeitpunkt vorhandene Amplitude des Sprachsignals dargestellt. Aus den digital abgespeicherten Amplitudenwerten werden für jeden Sprachblock SB eines neuen Wortes NW Merkmalsvektoren MV berechnet, worin zum Beispiel für jedes der einzelnen Frequenzbänder die Energieverteilung beschrieben ist. Auch diese Berechnung der Merkmalsvektoren MV wird für jede einzelne Äußerung getrennt durchgeführt. Die zu der Figur 2 a gehörende Energieverteilung ist in der Figur 2 b dargestellt. Entsprechendes gilt für die Figuren 3 3 a und 3 b bei einem anderen Sprachblock SB 2. Diese Energieverteilungen werden digital gespeichert, so daß für jeden Merkmalsvektor MV ein Paket von Zahlenwerten vorliegt. Außerdem ist bei einem Merkmalsvektor MV angegeben, zu welchem Sprachblock SB er gehört.

Bei jeder Äußerung des gleichen Wortes entsteht im allgemeinen eine unterschiedliche Anzahl von Merkmalsvektoren MV, weil die Sprechgeschwindigkeit der einzelnen Sprecher verschieden ist.

Wenn für das neue Wort NW die Sprachblöcke SB gebildet und die zugehörigen Merkmalsvektoren MV berechnet worden sind, so ist die Vorverarbeitung für die Aufnahme eines neuen Wortes NW in den gesamten Wortschatz einer sprecherunabhängigen Spracherkennungseinrichtung abgeschlossen.

Da von jedem Wort nur ein einziges Wortmodell vorhanden sein soll, wird auch für ein neues Wort NW jede einzelne Äußerung in einer einheitlich großen Anzahl von Modellzuständen Q1 bis Qn unterteilt.

Wenn diese Prozedur abgeschlossen ist, werden von jedem Modellzustand Q1 bis Qn alle Merkmalsvektoren MV des neuen Wortes NW in die Dichtefunktionen DF eingesetzt, die für den Grundwortschatz GW errechnet worden sind. Bei diesen Dichtefunktionen DF handelt es sich beispielsweise um Gaußdichten, die durch z. B.

16 Mittelwerte mi und

16 Varianzen σi

gekennzeichnet sind.

Die Dichtefunktionen DF sind so aus dem Grundwortschatz GW ermittelt worden, daß alle darin vorkommenden Laute gut repräsentiert sind.

Beim Einsetzen aller z. B. 16 Komponenten eines Merkmalsvektors MV in alle vorhandenen Dichtefunktionen DF 1 bis DF n gilt folgende Formel:

$$P(y_i) = \frac{1}{\sqrt{2\pi \cdot \sigma_i}} \times e^{\frac{-1}{2\sigma_i}} \times (y_i - m_i)^2$$

Demnach werden für alle z. B. 16 Komponenten eines jeden Merkmalsvektors MV die Einzelwerte yi in diese Formel eingesetzt und davon der bekannte Mittelwert mi der gerade betrachteten Dichtefunktion, z. B.

DF 1, subtrahiert. Diese Differenz wird dann quadriert, so daß sich ein Absolutwert ergibt, der den Abstand von diesem Mittelwert, also dem Maximalwert einer Gauß'schen Kurve, ergibt. Wenn diese Berechnung für jede einzelne Komponente eines Merkmalsvektors MV durchgeführt ist, so ergibt sich für diesen Merkmalsvektor MV aus dem Produkt

$$P \; (y) \; = \; p \; (y1) \; x \; p \; (y2) \; - - - - \; x \; p \; (y16) \; = \; DW$$

ein Dichtewert DW, der auf die gerade betrachtete Dichtefunktion DF1 bezogen ist. Wenn ein Merkmalsvektor MV auf die zuvor beschriebene Weise mit allen Dichtefunktionen DF1 bis DFn bearbeitet worden ist, so stehen für diesen Merkmalsvektor MV so viele Dichtewerte DW zur Verfügung, wie Dichtefunktionen DF1 bis DFn vorhanden sind. Daraus wird nun ermittelt, welcher Dichtewert DW der größte ist. Die dazu gehörende Dichtefunktion DF paßt also am besten zu dem gerade bearbeiteten Merkmalsvektor, z. B. MV2.

Wenn für alle Merkmalsvektoren MV1 bis MVn die jeweils größten Dichtewerte DW ermittelt worden sind, so wird festgestellt, wie häufig solche Maximal-Dichtewerte, bezogen auf die jeweilige Dichtefunktion, z. B. DF2, auftreten. Diese Häufigkeitswerte werden mit Zählern festgestellt und gespeichert. In Abhängigkeit von der Häufigkeit des Auftretens dieser maximalen Dichtewerte DW wird den betreffenden Dichtefunktionen DF1 bis DFn ein mehr oder weniger großes Gewicht G1 bis Gn zugeordnet. Bei diesen Gewichten G1 bis Gn handelt es sich um Faktoren, mit denen der Wert der jeweiligen Dichtefunktion DF1 bis DFn multipliziert wird, wenn die Zuordnung der Dichtefunktionen Df1 bis DFn zu den Modellzuständen Q1 bis Qn des neuen Wortes NW erfolgt. Eine derartige Zuordnung von Dichtefunktionen DF1 bis DFn ist schematisch in Figur 4 dargestellt.

Für jeden Modellzustand Q1 bis Qn des neuen Wortes NW werden nur die zugehörigen Gewichte G1 bis Gn abgespeichert. Alle Modellzustände Q1 bis Qn mit den zugehörigen Gewichten G1 bis Gn ergeben das neue Wortmodell, welches eine Struktur hat, wie sie auch bei den Wortmodellen des Grundwortschatzes GW vorliegt. Damit gehört das neue Wort NW zum Gesamtwortschatz dazu und kann mit annähernd gleicher Sicherheit erkannt werden wie die Wörter des Grundwortschatzes GW.

## Patentansprüche

1. Verfahren zur Erweiterung des Wortschatzes für sprecherunabhängige Spracherkennung, wobei ein Grundwortschatz von zu erkennenden Wörtern gebildet wird, indem aus den von einer größeren Anzahl, von verschiedenen, zum Beispiel mehr als 20 Sprechern gesprochenen Wörtern Wortmodelle erzeugt werden, deren spezifische Eigenschaften abgespeichert werden und zum Vergleichen der zu erkennenden Wörter dienen, wobei jedes Wort in Spracheblöcke aufgeteilt wird, woraus Merkmalsvektoren errechnet werden, und wobei den aufeinanderfolgenden Zuständen des Wortmodells eines jeden Wortes des Grundwortschatzes Gewichte zugeordnet werden, die sich auf alle für den Grundwortschatz vorhandenen, die Merkmale eines jeden Sprachblockes beschreibenden Dichtefunktionen beziehen, **dadurch gekennzeichnet,** daß ein von wenigen - zum Beispiel weniger als 5 - Sprechern trainiertes neu in den Wortschatz aufzunehmendes Wort (NW) ebenso in Sprachblöcke (SB) und in daraus errechnete Merkmalsvektoren (MV) aufgeteilt wird, wie die Worte des bereits bestehenden Grundwortschatzes (GW), daß die Merkmalsvektoren (MV) den Modellzuständen (Q1 bis Qn) des zu trainierenden neuen Wortes (NW) zugewiesen werden, daß jeder einzelne Merkmalsvektor (MV) in alle Dichtefunktionen (DF1 bis DFn) eingesetzt wird, welche für den bereits bestehenden Grundwortschatz (GW) ermittelt wurden, daß jeder einzelne Merkmalsvektor (MV) in alle Dichtefunktionen (DF1m bis DFn) eingesetzt wird, welche für den bereits bestehenden Grundwortschatz (GW) ermittelt wurden, daß dabei jeweils herausgefunden wird, welche Dichtefunktion (DF) den größten Dichtewert (DW) liefert, wobei festgestellt wird, wie groß die Häufigkeit eines solchen größten Dichtewertes (DW) ist, und daß daraus Gewichte (G1 bis Gn) für die Dichtefunktionen (DF1 bis DFn) in den jeweiligen Modellzuständen (Q1 bis Qn) des neuen Wortes (NW) errechnet werden, so daß ein dabei entstehendes neues Wortmodell ähnlich gut beschrieben ist, wie ein Wortmodell bei einem von vielen Sprechern trainierten Wort.

2. Verfahren nach Anspruch 1, dadurch gekennzeichnet, daß bei der Berechnung der Gewichte (G1 bis Gn) für die Dichtefunktionen (DF1 bis DFn) eines neuen Wortes (NW) auch die nächstgrößten Dichtewerte (DW), z. B. der zweitgrößte und der drittgrößte, der Dichtefunktionen (DF) berücksichtigt werden, die dann mit einem geringerem Beitrag in die Rechnung eingehen.

3. Verfahren nach Anspruch 1,
dadurch gekennzeichnet,
daß bei der Berechnung der Gewichte (G1 bis Gn) für die Dichtefunktionen (DF1 bis DFn) eines neuen Wortes (NW) die Werte für alle im bereits vorhandenen Grundwortschatz (GW) auftretenden Dichtefunktionen (DF1 bis DFn) jeweils durch den größten Dichtewert (DW) des betreffenden Merkmalsvektors (MV) dividiert und dann aufsummiert werden.

4. Verfahren nach einem der Ansprüche 1 bis 3
dadurch gekennzeichnet,
daß in Abhängigkeit von der Anzahl der zum Trainieren eines neuen Wortes (NW) zur Verfügung stehenden Sprechern dasjenige Verfahren ausgewählt wird, welches die besten Ergebnisse liefert, wobei das Verfahren nach Anspruch 1 bei einer großen Anzahl von Sprechern, das Verfahren nach Anspruch 2 bei einer mittleren Anzahl (z. B. 5 bis 20) von Sprechern, und das Verfahren nach Anspruch 3 bei sehr wenigen Sprechern angewendet wird.

SB1    SB2

Fig. 2a    Fig. 3a

Fig. 1

Fig. 2a

Fig. 2b

Fig. 3a

Fig. 3b

GW

zu Q₁  zu Q₂

zu Qₙ

NW

Fig. 4

MV₁  MV₂  MV₃  MVₙ